# EUROPÄISCHE PATENTANMELDUNG

(11) **EP 0 587 108 A1**
(43) Veröffentlichungstag der Anmeldung: **16.03.1994**
(21) Anmeldenummer: 93114319.2
(22) Anmeldetag: 07.09.1993
(51) Int. Cl.: B62B 3/10

(54) **Von Hand bewegbarer Transportwagen**

(30) Priorität: 08.09.1992 DE 4229993
(71) Anmelder: Wanzl GmbH & Co. Entwicklungs-KG, D-89336 Leipheim (DE)
(72) Erfinder: Wanzl, Rudolf, D-89340 Leipheim (DE)

(57) **Zusammenfassung**

Die Erfindung betrifft einen von Hand bewegbaren Einkaufswagen (1), der mit gleichen Einkaufswagen (1) stapelbar ist und der ein Fahrgestell (2) aufweist, das einen Korb (4) trägt und wahlweise wenigstens eine weitere Ablage zum Abstellen von Ware vorgesehen sein kann, der ferner mit einer Schiebeeinrichtung (8) ausgestattet ist und der eine um eine horizontale Achse (9) in das Korbinnere verschwenkbare, das rückwärtige Korbende verschließende Klappe (10) aufweist, wobei die Klappe (10) mit Schlaufen ausgestattet ist, welche die horizontale Achse (9) umfassen. Das Wesen der Erfindung besteht darin, daß sich am inneren Krümmungsbereich (12) der Schlaufen (11) aus elastischem Material bestehende Lagerelemente (13) befinden, die zwischen den Schlaufen (11) und der horizontalen Achse (9) angeordnet sind und Abstützflächen (21) für die Klappe (10) auf der horizontalen Achse (9) bilden. Durch diese Maßnahme werden lästige Geräusche vermieden, die bisher beim Fahren mit Einkaufswagen (1) von der Klappe (10) verursacht wurden.

## Beschreibung

Die Erfindung betrifft einen von Hand bewegbaren Einkaufswagen, der mit gleichen Einkaufswagen stapelbar ist und der ein Fahrgestell aufweist, das einen Korb trägt und wahlweise wenigstens eine weitere Ablage zum Abstellen von Ware vorgesehen sein kann, der ferner mit einer Schiebeeinrichtung ausgestattet ist und der eine um eine horizontale Achse in das Korbinnere verschwenkbare, das rückwärtige Korbende verschließende Klappe aufweist, wobei die Klappe mit Schlaufen ausgestattet ist, welche die horizontale Achse umfassen.

Einkaufswagen dieser Art sind seit langem bekannt. Die Körbe und Klappen solcher Wagen sind als Drahtgitterkonstruktionen gestaltet, wobei die Klappen in ihrem oberen Bereich mit Drahtschlaufen ausgestattet sind, die jeweils eine als Drahtstab gestaltete horizontale Achse von oben her umfassen. Damit die Klappen beim Stapeln mehrerer Einkaufswagen in bekannter Weise in das Korbinnere verschwenkt werden können, sind sie mit Spiel um die Drahtstäbe gebogen. Diese funktionale Notwendigkeit birgt den Nachteil in sich, daß die Klappen beim Fahren mit den Einkaufswagen, insbesondere auf unebenem Boden, unangenehme Klappergeräusche deshalb entwickeln, weil sie an den Körben anschlagen. Man hat daher in der Vergangenheit durch verschiedene Maßnahmen versucht, diesen Nachteil zu beseitigen. Eine dieser Maßnahmen bestand darin, am hinteren Rand des Korbbodens aus Kunststoff bestehende kleine Puffer anzubringen, an welche der untere Rand der Klappe anstößt. Diese Maßnahme bewirkt auf jeden Fall eine Reduzierung der Lärmentwicklung. Ein nicht zu vernachlässigender Restlärm geht allerdings weiterhin von den Schlaufen der Klappen aus, die aufgrund ihrer Formgebung ein allseitiges Bewegen der Klappen gegenüber dem Drahtstab, an dem sie aufgehängt sind, ermöglichen.

Die Aufgabe der Erfindung besteht darin, bei einem Einkaufswagen der gattungsgemäßen Art im Bereich der Schlaufen der Klappen Verbesserungen derart vorzusehen, daß lästige Geräuschentwicklungen durch die Klappe vermieden werden.

Die Lösung der Aufgabe besteht darin, daß sich am inneren Krümmungsbereich der Schlaufen aus elastischem Material bestehende Lagerelemente befinden, die zwischen den Schlaufen und der horizontalen Achse angeordnet sind und Abstützflächen für die Klappe auf der horizontalen Achse bilden.

Durch diese einfache wie zweckmäßige Gestaltung wird vermieden, daß die metallischen Schlaufen direkt auf der metallischen Oberfläche der horizontalen Achse aufliegen. In vorteilhafter Weise sind zwischen den Schlaufen und der horizontalen Achse die geräuschdämpfend wirkenden Lagerelemente angeordnet, welche verhindern, daß Klappergeräusche entstehen.

Die Erfindung wird anhand eines Ausführungsbeispieles näher erläutert. Es zeigt
- Fig. 1: einen Einkaufswagen;
- Fig. 2: ein Lagerelement für eine Klappe;
- Fig. 3: den Aufsetzvorgang eines Lagerelementes auf eine Schlaufe, sowie
- Fig. 4: ein Lagerelement in endgültig montiertem Zustand.

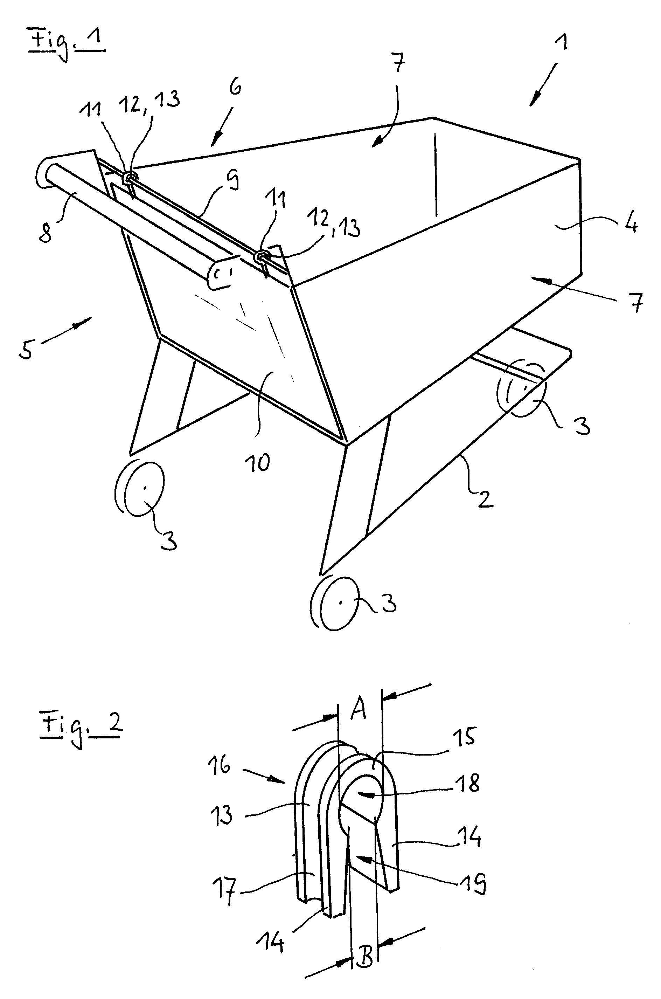

Der in Fig. 1 dargestellte Einkaufswagen 1 weist ein Fahrgestell 2 mit wenigstens drei Fahrrollen 3 auf. Das Fahrgestell 2 trägt einen aus Drahtgitter gefertigten Korb 4. Am rückwärtigen Ende 5 des Korbes 4 oder des Fahrgestelles 2 befindet sich eine Schiebeeinrichtung 8. Sowohl das Fahrgestell 2, als auch der Korb 4, sind in bekannter Weise konisch so gestaltet, daß sich mehrere gleiche Einkaufswagen 1 platzsparend ineinanderschieben, also stapeln lassen. Zu diesem Zweck ist die rückwärtige Wand des Korbes 4 in ebenfalls bekannter Weise als eine um eine horizontale Achse 9 in das Korbinnere und zurück verschwenkbare Klappe 10 ausgebildet. Die horizontale Achse 9 ist üblicherweise als Drahtstab gestaltet, der im rückwärtigen Bereich des Korbes 4 bevorzugt über den Seitenwänden 7 des Korbes 4 angeordnet ist und diese verbindet. Anstelle eines Drahtstabes kann die horizontale Achse 9 auch durch zwei nicht näher dargestellte Vorsprünge gebildet sein, die gegeneinandergerichtet, von den Seitenwänden 7 wegragen. Die ebenfalls bevorzugt als Drahtgitterkonstruktion gestaltete Klappe 10 weist wenigstens zwei Schlaufen 11 auf, die in bekannter Weise, ausgehend von der oberen Begrenzung der Klappe 10, nach oben gerichtet sind und die horizontale Achse 9 von oben her umfassen. Im inneren Krümmungsbereich 12 einer jeden Schlaufe 11 ist jeweils ein Lagerelement 13 vorgesehen, dessen Aussehen und Funktion nachfolgend näher beschrieben wird. Am Einkaufswagen 1 kann in bekannter Weise ebenfalls wenigstens eine weitere, nicht näher dargestellte Ablage, z.B. ein Bodenrost, oder eine nach hinten ausklappbare Kistenablage oder dgl. vorgesehen sein.

Fig. 2 zeigt eines der Lagerelemente 13, dessen Form an eine Seilkausche erinnert. Die beiden Schenkel 14 des Lagerelementes 13 vereinigen sich in einer etwas mehr als halbkreisförmigen Krümmung 15. Die äußere Kontur 16 des Lagerelementes 13 weist eine Vertiefung 17 auf, die ausgehend vom ersten Schenkel 14 über die Krümmung 15 bis zum Ende des zweiten Schenkels 14 verläuft und zur Aufnahme eines Teils einer Schlaufe 11 vorgesehen ist. Der Querschnitt der Vertiefung 17 ist wie bei einer Seilkausche kreisbogenabschnittförmig ausgebildet. Im Bereich der Krümmung 15 befindet sich ein quer zur Längserstreckung der Vertiefung 17 angeordneter Durchbruch 18, dessen Querschnitt ebenfalls kreisbogenabschnittförmig gestaltet ist und einen Krümmungswinkel größer 180° und kleiner 270° einschließt. Im Anschluß an den Durchbruch 18 ist durch die beiden auf Abstand gehaltenen Schenkel 14 ein Zwischenraum 19 gebildet, der sich, wie in Fig. 3 ersichtlich, nach unten leicht keilförmig erweitert. Der Durchbruch 18 und der Zwischenraum 19 gehen ohne Zwischenwand ineinander über. Der Durchmesser A des Durchbruches 18 ist größer, als die am Übergang zwischen Durchbruch 18 und Zwischenraum 19 gemessene lichte Weite B.

Fig. 3 zeigt den Aufsetzvorgang eines Lagerelementes 13 auf eine der Schlaufen 11 einer Klappe 10. Die metallische, bevorzugt aus Draht gefertigte Schlaufe 11 ist nur so weit umgebogen, daß das Lagerelement 13 von unten nach oben bewegend in den inneren Krümmungsbereich 12 der Schlaufe 11 eingesetzt werden kann, wobei ein Teil der Schlaufe 11 in der Vertiefung 17 des Lagerelementes 13 zu liegen kommt. Strichpunktiert ist das aufgesetzte Lagerelement 13 eingezeichnet. Damit das aufgesetzte Lagerelement 13 in seiner Lage verharrt, ist die lichte Weite der Schlaufe 11 so gewählt, daß zwischen der Schlaufe 11 und dem Lagerelement 13 eine leichte Verklemmung eintritt, welche verhindert, daß sich das Lagerelement 13 von selbst von der Schlaufe 11 löst. Die eben geschilderten konstruktiven Einzelheiten erleichtern in einem ersten Montageschritt in zweckmäßiger Weise das Aufsetzen einer mit Lagerelementen 13 bestückten Klappe 10 auf die horizontale Achse 9.

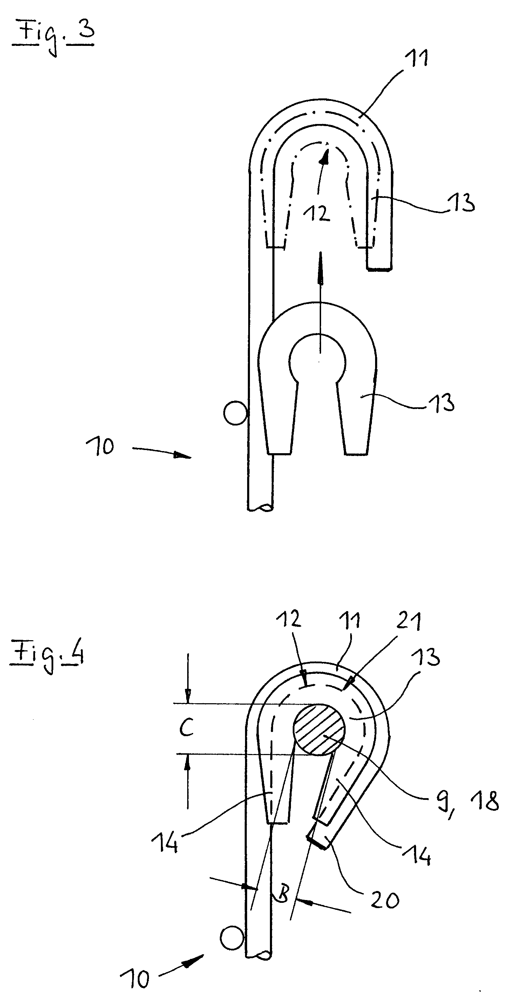

In Fig. 4 ist eine mit einem Lagerelement 13 ausgestattete Schlaufe 11 in auf die horizontale Achse 9 aufgesetztem und endgültig montiertem Zustand dargestellt. Die stabförmige horizontale Achse 9 durchdringt mit Spiel den Durchbruch 18 des Lagerelementes 13. Der Durchmesser C der horizontalen Achse 9 ist größer, als die lichte Weite B des Lagerelementes 13. Die Schlaufe 11 ist nach dem abschließenden zweiten Montageschritt noch weiter umgebogen, als dies im Zustand nach Fig. 3 der Fall ist. Durch das weitere Umbiegen der Schlaufe 11 wird auch der in der Zeichnung rechts dargestellte Schenkel 14 des Lagerelementes 13 näher zum anderen Schenkel 14 gedrückt. Das Lagerelement 13 wird demnach beim Verbiegen der Schlaufe 11 ebenfalls verbogen; es paßt sich mit einem seiner Schenkel 14 der Richtung des freien Schlaufenendes 20 an. Das Lagerelement 13 besteht aus einem biegefähigen Kunststoff. Es bricht beim Verbiegen der Schlaufe 11 nicht. In derart umgebogener Lage der Schlaufen 11 läßt sich die Klappe 10 nicht mehr von der horizontalen Achse 9 lösen. Wie aus der Zeichnung ersichtlich ist, befindet sich das Lagerelement 13, im inneren Krümmungsbereich 12 der Schlaufe 11 unlösbar angeordnet, zwischen der Schlaufe 11 und der horizontalen Achse 9. Jedes der Lagerelemente 13 trennt die metallischen Flächen der Schlaufe 11 von der metallischen Fläche der horizontalen Achse 9. Die Lagerelemente 13 bilden demnach Abstützflächen 21 für die Klappe 10 auf der horizontalen Achse 9. Da die Lagerelemente 13 aus elastischem, geräuschdämpfendem Kunststoff oder ähnlichem Material bestehen, entstehen beim Bewegen oder Schlagen der Klappe 10 keine oder nur noch vernachlässigbare Geräusche.

Es bleibt abschließend zu erwähnen, daß die Lagerelemente 13 auch so gestaltet sein können, daß die lichte Weite B gleich dem Durchmesser A des Durchbruches 18 entspricht. Beim abschließenden Befestigungsvorgang der Schlaufen 11 auf der horizontalen Achse 9 werden die Schlaufen 11 und damit die Lagerelemente 13 nochmals weiter zusammengedrückt, so daß die Klappe 10 ebenfalls nicht mehr von der horizontalen Achse 9 abgenommen werden kann. Allerdings besitzen Lagerelemente 13, die entsprechend der Ausführungsbeispiele nach Fig. 2 bis 4 gestaltet sind den Vorteil, daß eine mit Lagerelementen 13 entsprechend Fig. 3 bestückte Klappe 10 schnappschlüssig auf die horizontale Achse 9 aufgesetzt werden kann, so daß diese sich bereits vor dem abschließenden Montagevorgang (Fig. 5) nicht mehr von der horizontalen Achse 9 lösen kann. Dieses Merkmal kann bei einer Massenfertigung dazu beitragen, die Montagezeiten zu verkürzen.

## Patentansprüche

1. Von Hand bewegbarer Einkaufswagen, der mit gleichen Einkaufswagen stapelbar ist und der ein Fahrgestell aufweist, das einen Korb trägt und wahlweise wenigstens eine weitere Ablage zum Abstellen von Ware vorgesehen sein kann, der ferner mit einer Schiebeeinrichtung ausgestattet ist und der eine um eine horizontale Achse in das Korbinnere verschwenkbare, das rückwärtige Korbende verschließende Klappe aufweist, wobei die Klappe mit Schlaufen ausgestattet ist, welche die horizontale Achse umfassen, dadurch **gekennzeichnet,** daß sich am inneren Krümmungsbereich (12) der Schlaufen (11) aus elastischem Material bestehende Lagerelemente (13) befinden, die zwischen den Schlaufen (11) und der horizontalen Achse (9) angeordnet sind und Abstützflächen (21) für die Klappe (10) auf der horizontalen Achse (9) bilden.

2. Einkaufswagen nach Anspruch 1, dadurch **gekennzeichnet,** daß die Lagerelemente (13) an ihrer äußeren Kontur (16) eine Vertiefung (17) zur Aufnahme eines Teils einer Schlaufe (11) aufweisen.

3. Einkaufswagen nach Anspruch 2, dadurch **gekennzeichnet,** daß der Querschnitt der Vertiefung (17) kreisbogenabschnittförmig gestaltet ist.

4. Einkaufswagen nach einem der Ansprüche 1 bis 3, dadurch **gekennzeichnet,** daß die Lagerelemente (13) einen Durchbruch (18) zur Aufnahme der horizontalen Achse (9) aufweisen.

5. Einkaufswagen nach Anspruch 4, dadurch **gekennzeichnet,** daß der Querschnitt des Durchbruches (18) kreisbogenabschnittförmig gestaltet ist.

6. Einkaufswagen nach Anspruch 4 oder 5, dadurch **gekennzeichnet,** daß der Querschnitt des Durchbruches (18) einen Krümmungswinkel größer 180° und kleiner 270° einschließt.

7. Einkaufswagen nach einem der Ansprüche 1 bis 6, dadurch **gekennzeichnet,** daß sich an den Durchbruch (18) ein durch die Schenkel (14) des Lagerelementes (13) gebildeter Zwischenraum (19) anschließt und daß der Durchmesser A des Durchbruches (18) größer ist, als die am Übergang zwischen dem Durchbruch (18) und dem Zwischenraum (19) gemessene lichte Weite B.

8. Einkaufswagen nach einem der Ansprüche 1 bis 7, dadurch **gekennzeichnet,** daß der Durchmesser C der horizontalen Achse (9) größer ist, als die lichte Weite B.

9. Einkaufswagen nach einem der Ansprüche 1 bis 7, dadurch **gekennzeichnet,** daß die lichte Weite B dem Durchmesser A des Durchbruches (18) entspricht.

10. Einkaufswagen nach einem der Ansprüche 1 bis 9, dadurch **gekennzeichnet,** daß die Lagerelemente (13) aus einem biegefähigen, geräuschdämpfendem Kunststoff gestaltet sind.

11. Einkaufswagen nach einem der Ansprüche 1 bis 10, dadurch **gekennzeichnet,** daß die Lagerelemente (13) in endgültig montiertem Zustand der Klappe (10) unlösbar zwischen den Schlaufen (11) und der horizontalen Achse (9) angeordnet sind.
